# EUROPEAN PATENT SPECIFICATION

(11) **EP 1 591 756 B1**
(45) Date of publication and mention of the grant of the patent: **19.03.2008**
(21) Application number: 04010243.6
(22) Date of filing: 30.04.2004
(51) Int. Cl.: G01C 21/36

(54) **Car multimedia system and method for activating a function of such a system**
Fahrzeugmultimediasystem und -verfahren zur Aktivierung einer Funktion eines solchen Systems
Système multimédia embarqué et méthode pour activer une fonction d'un tel système

(43) Date of publication of application: 02.11.2005
(73) Proprietor: Harman Becker Automotive Systems GmbH, 76307 Karlsbad (DE)
(72) Inventor: Preissner, Olaf, 70199 Stuttgart (DE); Geiger, Erich, Dr., 75236 Kämpfelbach (DE); Roessger, Peter, 72631 Aichtal (DE)
(74) Representative: Bertsch, Florian Oliver

(56) References cited:
- EP-A- 1 122 519
- EP-A- 1 186 460
- US-A- 5 887 269
- US-B1- 6 415 224

## Description

The present invention relates to a car multimedia system comprising an audio unit, a navigation unit for route guidance, a controller device for controlling said units, a display for displaying selection menus with hierarchically structured menu items and end-menu items, said end-menu items allowing to start a specific function, and a selection key unit comprising at least a push button switch, preferably a hard key, a two way control, preferably a rotary knob, for selecting and a push button switch for activating menu items and end-menu items. The invention also relates to a method for activating a function of such a car multimedia system.

Such car multimedia systems are known. The applicant of the present invention for example offers a plurality of different types of car multimedia systems under the brand name "Becker". All of these systems have in common that they are designed to fit into standardized installation slots, in the dashboard of a car. Due to such space requirement the dimensions of a front panel of the car multi media system are limited. Therefore, the front panel of the car multimedia system carries only a minimum number of selection keys, like hard keys and soft keys, one or two rotary push button switches and a display for displaying information and selection menus. The hard keys are assigned a predetermined function, whereas the soft keys are assigned variable functions to be selected.

Since car multimedia systems offer a plurality of different functions, including audio functions like radio or CD, navigation functions like route guidance, or telecommunication functions, like telephone, e-mail, SMS or WAP, a hierarchically structured menu system allows to select these functions by using some few hard keys, soft keys and the rotary push button switch.

As generally known, a hierarchically structured menu system comprises a root menu item in a main menu level and a plurality of menu items in one or more sub-menu levels. In the context of the present invention each menu item in the lowest sub-menu level is called end-menu item.

The display of the car multimedia system serves two display menu items which may be selected by rotating the rotary push button and selected by pushing it.

Due to the increasing number of functions offered by present car multimedia systems, the number of menu items as well as the number of sub-menu levels rapidly increases with the result that the user of the car multimedia system has to pass through many sub-menu levels as to reach the desired end-menu item. Hence, this selection takes more time than just to push a hard or soft key with the result that the users attention is focused on the car multimedia system for a "relatively long period" rather than on the traffic. This may lead to dangerous situations.

US 5,887,269 discloses a navigation system according to the preamble of claim 1.

In view of the above it is an object of the present invention to provide a car multimedia system of the afore mentioned kind which allows to select and activate functions in a faster way as to minimize the period within which the user focuses his attention to the car multimedia system.

This object is solved by the car multimedia system of the afore mentioned kind which comprises a discriminating device adapted to select an end-menu item in response to an actuation of said switch, preferably said hard key, said end-menu item being selected by said discriminating device on the basis of a predetermined criterion.

That is in other words that the discriminating device shortens the selection process, i.e. the selection of an end-menu item, to a single touch of a switch. Hence, all sub-levels and menu items between the root menu item and the end-menu item are skipped. The discriminating device selects the end-menu item on the basis of a predetermined criterion which may be preset by the user or which is preset by the system.

The user has only to confirm the selection of the discriminating device by pushing the rotary push button switch thus activating this end-menu item.

It is apparent that the discriminating device allows to shorten the period necessary for selecting and activating a specific function (assigned to an end-menu item) and hence to keep the time during which the users attention is focused on the operation of the car multimedia system, is kept on a minimum.

In a preferred embodiment said discriminating device is adapted both to select and activate said and menu item.

This is in other words that the user is reliefed from activating the selected end-menu item by pushing the rotary push button switch. Instead, the discriminating device fulfils this task and also activates the selected end-menu item.

This measure has the advantage that the period for selecting and activating a function is further reduced and therewith the users distraction from traffic.

In a further preferred embodiment, said criterion is the number of former selections of the end-menu items assigned to said switch, preferably said hard key. Preferably said discriminating device is adapted to select the end-menu item with the largest number of former selections.

That is in other words that the discriminating device selects those end-menu item which has been used by the user most frequently before. Thus, the discriminating device determines a favourite out of the end-menu items belonging to a common root menu item which is selected and activated by a hard key.

These measures result in improved ergonomics and take the usual behaviour of the user into account. The inventors of the present invention have found out that despite the plurality of selectable functions users of car multimedia systems generally use only a few number of functions in practise.

In a preferred embodiment, a data memory for storing data packets each being assigned to an end-menu item is provided, wherein each data packet carries the number of selections of the assigned end-menu item. Preferably, each data packet further carries the date of last use of the assigned end-menu item. Most preferably, said data memory stores at least two data packets for each assigned end-menu item.

These measures implement a data structure which allows to build up lists of favourite end-menu items. These end-menu item lists are managed by the discriminating device and serves to further increase the ergonomics of the whole system. Particularly, the implementation and maintenance of such lists allow to better react on the requests of the user.

In a preferred embodiment, said discriminating device is adapted to allow the selection of menu items according to the hierarchical structure by using the rotary push button (overrule mode). Preferably, said overrule mode is activated by a double activation of said hard key.

That is in other words that the user may "switch off" the discriminating device so that the normal selection and activation of an end-menu item by passing through the menu hierarchy is possible. Since this overrule mode may be selected by pushing the hard key twice, the user is not distracted by searching another hard or soft key on the front panel of the car multimedia system for selecting this mode.

In a preferred embodiment said controller device is adapted to delete said data packets assigned to at least one of said end-menu items in response to a predetermined input via said selection key unit.

That is in other words that the user may delete at least one member of the favourites list. This measure has the advantage that the system may further be adapted to the users requests.

In a further preferred embodiment, said control device is adapted to allow the selection of a criterion out of a predetermined list of criteria via said selection key unit.

This is in other words that the user is allowed to determine the criterion which is the basis for the discriminating device to select an end-menu item. As already mentioned, the preferred criterion is the frequency of use of end-menu items. However, other criteria are also conceivable.

This measure allows to further adapt the system to the users requests and demands.

In a preferred embodiment, a telecommunications unit comprising a telephone module and an internet module allowing e-mail, SMS transmission, WAP and other telecommunication services is provided. Further, that audio unit comprises a radio module and a CD module.

The present invention is particularly useful if the car multimedia system offers a plurality of different functions.

As already mentioned before, the selection and activation of menu items is made by said rotary push button switch. However, it is apparent for a skilled person that the rotary push button switch may be provided as two single units, namely a rotary knob and a push button switch instead of a single unit integrating both. Moreover, the rotary switch may be replaced with a two-way switch or a four-way switch, as well.

In a preferred embodiment said hard key is provided for activating the navigation unit.

Due to the fact that the navigation unit offers a plurality of functions with the respective plurality of menu items, the present invention is particularly useful.

However, it is apparent that further hard keys may be provided for activating other units, like the audio unit, the telecommunications unit, etc. Each hard key is assigned a hierarchically structured menu with menu items and end-menu items. For each hierarchically structured menu, at least one favourite end-menu item is stored and selected by the discriminating device in response to the activation of the respective hard key.

The object of the present invention is also solved by a method for activating a function of said car multimedia system, the method comprising the step of selecting and end-menu item in response to an actuation of said hard key, wherein said end-menu item is selected on the basis of predetermined criterion.

This method achieves the same advantages as the inventive car multimedia system as described above so that it is referred to the respective description.

In a preferred embodiment, said end-menu item is both selected and activated in response to said actuation of said hard key.

Preferably, said criterion is the number of former selections of said end-menu items assigned to said hard key.

It is also preferred that the end-menu item with the greatest number of selections is selected. Preferably, a counter value assigned to said end-menu item is increased by one with each selection of an end-menu item. Further, an actual date of use is stored for an end-menu item with each selection of said end-menu item.

Preferably, the selection and activation of menu items according to the hierarchical structure is allowed (overrule mode) in response to a predetermined operation of said selection unit, preferably a double actuation of said hard key.

Preferably, said counter values may be deleted either separately or in common via said selection key unit.

In the above it has been described that said discriminating device selects an end-menu item in response to an actuation of said hard key. However, it is to be understood that the discriminating device may also be adapted to select an end-menu item in response to an actuation of a soft key or any other switch of the car multimedia system.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:
- Figure 1: shows the front panel of a car multimedia system according to the present invention;
- Figure 2: shows an example of a hierarchically structured menu;
- Figure 3: is a schematic block diagram of the car multimedia system; and
- Figure 4: is a block diagram illustrating an example of a data structure used by the car multimedia system.

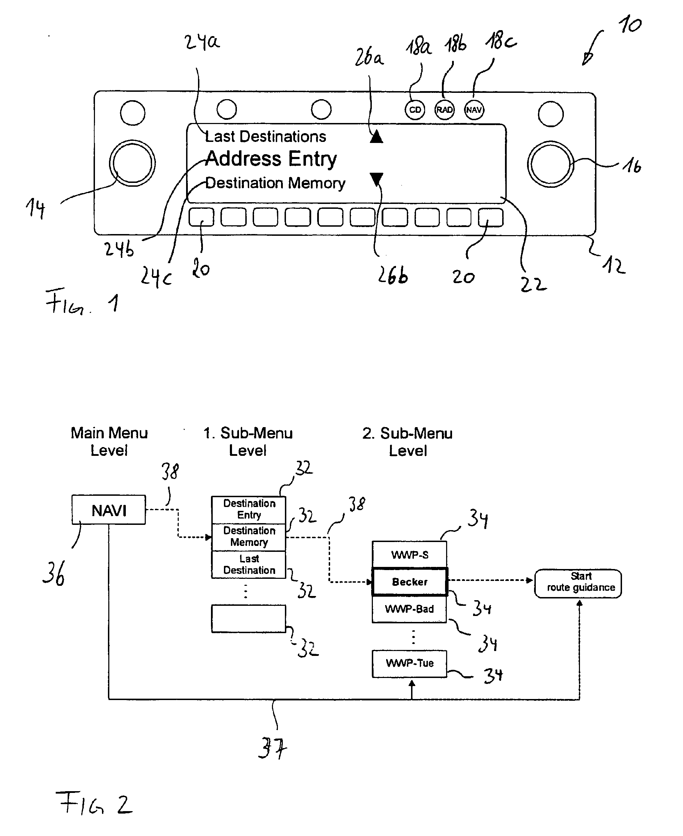

In Figure 1 a front panel 12 of a car multimedia system 10 is schematically shown. The car multimedia system 10 is designed as a device which fits into the standardized installation slot in the dashboard of a vehicle. In addition to the device disposed in the dashboard a further device is placed within the vehicle, for example in the glove compartment. This second device is the so called GSM/GPS box offering navigation and telecommunication services. The GSM/GPS box is electrically connected with the device in the dashboard (both devices defining the car multimedia system 10).

Both devices have a plurality of connectors allowing to connect necessary hardware, like ear-phone, GSM antenna, GPS antenna, hence free microphone, radio antenna, loud speaker, etc. For the sake of simplicity, these parts are not shown in Figure 1.

The car multimedia system offers a plurality of different functions and services, for example radio, navigation, telephone, e-mail, SMS, etc. All these functions and services may be selected by a user of the car multimedia system 10 via the front panel 12.

The front panel 12 comprises a first rotary push button switch 14 which allows to control the volume by rotating the rotary push button 14 and to switch on and off the car multimedia system 10 by pushing the rotary push button switch 14. The rotary push button switch 14 is placed on the left hand side of the front panel 12. On the right hand side a second rotary push button 16 is provided which allows to select a menu item by rotating and to activate it by pushing the rotary push button switch 16.

Further selection keys in form of push button switches are provided in the upper front panel area. Three of these selection keys are referenced with reference numeral 18a, 18b and 18c. The selection keys 18 serve to select a predetermined function of the car multimedia system 10, in the present case the CD function with selection key 18a, the radio function with selection key 18b and the navigation function with selection key 18c. Generally such selection keys provided for selecting one specific function are called "hard keys".

In addition to these hard keys, the front panel 12 also carries so called soft keys 20. These soft keys serve to select variable functions depending on the on mode in which the car multimedia system is operated. In the present embodiment, ten soft keys are provided in the lower margin area of the front panel 12.

In the centre of the front panel 12, a display 22 is disposed. In the present embodiment, the display 22 is a DOT matrix display, which allows to display several lines of information in form of characters, words or pictures, icons or pictograms.

In Figure 1, the display 22 displays three lines of information in form of three different menu items 24a, 24b and 24c. The menu item shown in the middle line 24b is displayed in a larger font compared to the information shown in the first and the third line 24a, 24c. The larger font indicates that the menu item in line 24b is selected.

Further, the display 22 displays two arrows 26a, 26b, the upper arrow 26a being directed upwards and the lower arrow 26b being directed downwards. Both arrows indicate that more menu items than displayed are reachable.

The user may select a menu item by rotating the rotary push button 16 until the desired menu item is displayed in the middle line 24b. In order to activate this selected menu item, the user than have to push the rotary push button 16. Depending on the selected and activated menu item, either further menu items are displayed or the desired function is started.

Although the use of hierarchically structured menus is known, a exemplary menu is shown in Figure 2 and will be explained below for better understanding of the present invention. Particularly, Figure 2 illustrates a part of the hierarchically structured menu for operation of the navigation system being part of the car multimedia system 10.

In general, the menu comprises a plurality of menu items 32 in a first sub-menu level and a plurality of menu items 34 in a second sub-menu level. All shown menu items 32, 34 belong to one main menu item 36 (root menu item) of the main menu level.

In the present embodiment, the first sub-menu level comprises the menu items "destination entry", "destination memory" and "last destination", which belong to the menu of the navigation system of the car multimedia system 10. The first sub-menu level, that is the menu items 32 are reached by selecting and activating the main menu item 36. This is achieved for example by pushing the hard key 18c.

The menu items 34 of the second sub-menu level belong to a specific menu item of the first sub-menu level, in the present embodiment the menu item "destination memory". In order to reach the menu items 34 of the second sub-menu level, the menu item "destination memory" of the first sub-menu level has to be selected and activated via the rotary push button switch 16.

For sake of simplicity, the other menu items of the second sub-menu level belonging to the menu items "destination entry" and "last destination" of the first sub-menu level are not shown.

As it is apparent from Figure 2, the second sub-menu level defines the last or lowest menu level, which means that by selecting and activating a menu item 34 of this sub-menu level, a function is started instead of displaying further menu items. Therefore, the menu items of this second sub-menu level are called hereinafter "end-menu items".

In the embodiment shown, the end-menu item "Becker" is selected and activated as to start route guidance to the address associated and stored with the name "Becker".

It is to be understood that this hierarchically structured menu is more illustrative and may be modified by providing more menu items in more than two sub-menu levels.

From the above description it may be seen that for selecting and activating the end-menu item "Becker", the user must first push the hard key 18c, than select and activate the menu item "destination memory" and finally select and activate the end-menu item "Becker", each by operating the rotary push button switch 16. At least for each selection of an menu item or end-menu item 32,34 the user has to focus his attention to the display 22 of the car multimedia system 10 in the dashboard. Generally, this means that the users view is distracted from the street what is to be avoided.

In order to minimize the time of distraction during selection and activation of an end-menu item, the car multi media system 10 has implemented a function which automatically selects an end-menu item 34 in response to the operation of a hard key 18. Particularly, the system selects an end-menu item on the basis of a predetermined criterion, which is in the present case the frequency of use of the end-menu items belonging to the main menu item.

With respect to Figure 2, this means that upon operation of the hard key 18c end-menu item "Becker" is selected under the assumption that this end-menu item 34 has been used most frequently in the past. Then the user must only activate the selected end-menu item "Becker" by pushing the rotary push button switch 16 as to start the route guidance function.

As a result, the operation is simplified since two handling steps, namely selecting and activating a menu item in the first sub-menu level and selecting an end-menu item in the second sub-menu level, are skipped. The difference between the conventional operation and the operation according to the present invention is indicated by arrows 37 and 38 in Fig. 2.

In a preferred embodiment, the system also automatically activates the selected end-menu item 34. With respect to Figure 2, this means that the end-menu item "Becker" is automatically selected and activated in response to the operation of the hard key 18c. Hence, according to this embodiment, the user may start the route guidance to the address associated with "Becker" just by one switching activity.

It is to be understood that the criterion "frequency of use" is just one, however the preferred, way of selection. A person skilled in the art will recognize that other criteria are also conceivable. The present invention is not limited to the criterion "frequency of use".

It may also be implemented that the criterion is variable depending on the selected root menu item. In other words, the selection of an end-menu item belonging to the root menu item "navigation" is carried out differently to the selection of an end-menu item belonging to for example the root menu item CD or radio.

Of course, the system allows to "overrule" the automatic selection of an end-menu item by operating the respective hard key 18 twice within a short predetermined period. The system recognizes this double operation and displays the menu item 32 of the first sub-menu level in the display 22 in response thereto. The user may than select and activate the desired menu items in the conventional manner.

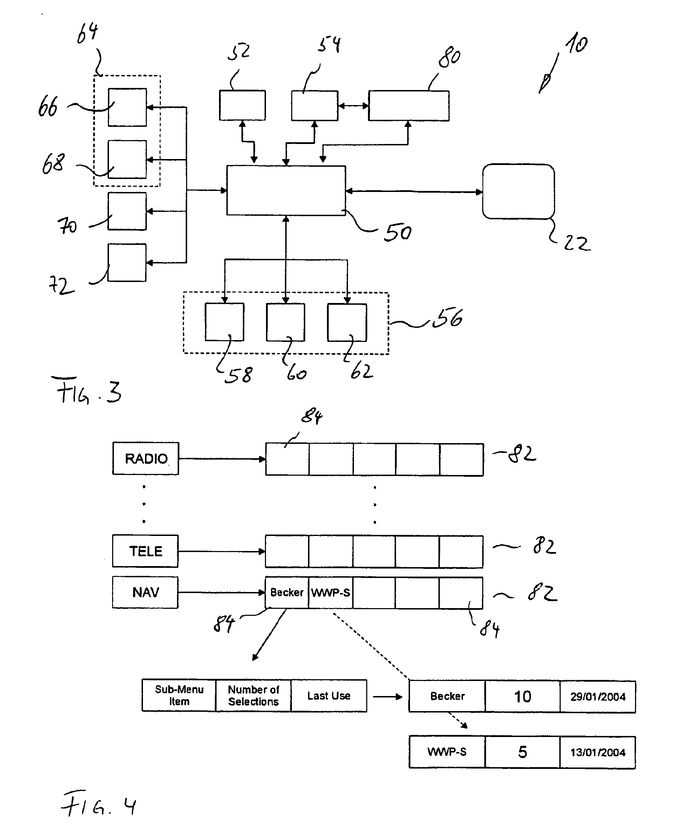

In Figure 3 the functional structure of the car multimedia system is shown in form of a block diagram. The car multimedia system 10 comprises a main controller 50 which generally comprises at least a microprocessor or a microcontroller. The main controller 50 is mainly responsible for controlling all peripheral units and to perform all operations necessary for providing the functions of the car multimedia system, like radio, CD, navigation, telephone, etc.

It is apparent for the man skilled in the art that the main controller 50 may comprise a couple of different circuits in practise, for example the microprocessor, a graphic driver circuit, a clock generator, etc.

The main controller 50 is coupled with a read only memory circuit 52 which serves to store all program data (firmware). Of course, the read only memory may be provided as an erasable and rewriteable read only memory, like EPROM, EEPROM, etc. Erasable read only memory circuits 52 have the advantage that the firmware for operating the car multimedia system may be updated.

In addition to the read only memory circuit 52 a random access memory circuit 54 (RAM) is also provided and coupled with the main controller 50. The random access memory serves to store temporary data and user specific data, in particular. For example, with respect to Figure 2 the random access memory 54 stores destinations programmed by the user. These stored destination data then form the menu items of the second sub-menu level.

The main controller 50 is electrically coupled with the display 22.

For allowing inputs a selection key unit 56 is provided and electrically coupled with the main controller 50. The selection key unit 56 comprises a couple of different control elements for example hard keys 58, soft keys 60 and rotary push button switches 62. Of course it is to be understood that other control elements may be provided if necessary. For example, a rotary push button switch may be replaced with a two way or four way switch and an additional confirmation switch. The hard keys and soft keys 58, 60 are provided as push button switches. In terms of mechanical structure, however, there is no difference between the hard keys 58 and the soft keys 60.

The main controller 50 is connected with further functional units namely an audio unit 64 comprising a CD device, a radio device (tuner), amplifiers, etc. The CD device is referenced with reference numeral 66 and the radio device is indicated with reference numeral 68. Further functional units are the navigation unit 70 and the telecommunications unit 72. The navigation unit for example comprises a DVD ROM device for receiving navigation data on a DVD ROM, a GPS receiver, a GPS antenna, etc. The telecommunications unit 72 comprises for example a GMS device and a GMS antenna.

Since the structure of these units 66-72 is not part of the present invention it is refrained from describing them in detail. A man skilled in the art knows how to design these units.

As already described before, the present invention provides an improved operation of the car multimedia system, namely by simplifying the selection and activation of an end-menu item.

To implement this improved operation, a discriminating device 80 is provided. The discriminating device 80 is electrically coupled with the main controller 50 and communicates therewith. Further, the discriminating device is coupled with the random access memory circuit 54 as to allow read and write operations of data.

The discriminating device 80 builds up and maintains a data structure and continuously updates the respective data necessary for carrying out the above mentioned automatic selection and activation of an end-menu item. In particular, the discriminating device 80 builds up a data structure as exemplaryly shown in Figure 4. However, it is to be noted that this is merely one example of a data structure and other data structures are also conceivable.

The data is preferably structured as data lists 82, each list 82 comprising at least one data packet 84. Each data list 82 is assigned to a main menu item, for example navigation, telecommunications and radio.

With respect to the data list 82 assigned to navigation, two data packets are indicated with the names "Becker" and "WWP-S" as already used in Figure 2. Each data packet 84 is divided into sub-packets in order to store different values. These values are also shown in Figure 4 which are sub-menu item, number of selections (frequency of use) and last use. The first value "sub-menu item" is preferably a pointer pointing to the respective data stored in the random access memory 54. The second value "number of selections" is a counter and defines the number of former uses of this end-menu item. In other words this value represents the frequency of use of the respective and menu item. The third value "last use" is the date of the last use of the respective end-menu item.

In the present embodiment the first data packet has the values "Becker", 10 and 29/01/2004; these values indicate that the end-menu item "Becker" has been selected and activated ten times and the last use of this end-menu item was January 29, 2004. The second data packet contains the values "WWP-S", 5 and 13/01/2004.

In the present embodiment, the data packets of the third data list 82 assigned to "navigation" is ordered with respect to the value "number of selections". That is the third data packet "Becker" defines the first element in the data list since the number of selections value is greater than the respective values of the other data packets.

As already mentioned before, the discriminating device 80 serves to maintain the data lists and data packets. Particularly, it updates the number of selections value in response to the selection and activation of the respective end-menu item. It further updates the "last use"-value.

Optionally, the discriminating device 80 is able to delete data packets out of the data lists if data packets have not been used for a predetermined period. Of course, it is also conceivable that the user may delete individual data packets or all data packets in the data lists by operating the selection key unit.

In addition to the build up and maintenance of the data structure, the discriminating device 80 causes the controller 50 to select and activate the end-menu item forming the first data packet in the respective data list 82 in response to the operation of a hard key 18. Upon operation of a hard key, the main controller 50 informs the discriminating device 80 thereof and receives the information from the discriminating device 80 which of the end-menu items is to be selected and optionally activated. The discriminating device 80 in turn gets this information from the data list 82. Simultaneously, the discriminating device 80 updates the respective values of the selected data packet.

As already mentioned before, the user may overrule the discriminating device 80 by double pushing the hard key. In this case the discriminating device 80 does not transmit an information to the main controller 50 about the end-menu item to be selected. Instead, the main controller 50 displays the stored menu items of the next sub-level menu. Nevertheless, the discriminating device updates the respective values of the data packet associated with the end-menu item the user has selected and activated manually.

It is to be understood that the functional structure of the car multimedia system as shown in Figure 3 is just one example and the present invention should not be limited thereto. Particularly, the discriminating device 80 may be also be part of the main controller 50 and may be implemented as hard- and/or software. Further, the car multimedia system 10 may comprise only the navigation unit, the audio unit, the telecommunications unit or each possible combination thereof.

Further, a man skilled in the art knows that other data structures may also be used to implement the present invention.

Those skilled in the art can now appreciate from the forgoing description that the broad teachings of the present invention can be implemented in a variety of forms. Therefore, while this invention has been described in connection with a particular example thereof, the scope of the invention should not be so limited since other modifications will become apparent to the skilled practitioner upon a study of the drawings, specification and the claims.

## Claims

1. Car multimedia system comprising
- an audio unit (64),
- a navigation unit (70) for route guidance,
- a controller device (50) for controlling said units,
- a display (22) for displaying selection menus with hierarchically structured menu items and end-menu items, said end-menu items allowing to start a specific function, and a selection key unit (56) comprising at least a push button switch (18), preferably a hard key, a two way switch, preferably a rotary knob, for selecting and a push button switch (16) for activating menu items and end-menu items, **characterized by**
- a discriminating device (80) adapted to select an end-menu item (34) in response to an actuation of said push button switch (18), preferably said hard key, by skipping sub-levels and menu items between a root menu item and said end-menu item, said end-menu item (34) being selected by said discriminating device (80) on the basis of a predetermined criterion.

2. The car multimedia system of claim 1, c**haracterized in that** said discriminating device is adapted both to select and activate said end-menu item.

3. The car multimedia system of claim 1 or 2, **characterized in that** said criterion is the number of former selections of the end-menu items assigned to said hard key.

4. The car multimedia system of claim 3, **characterized in that** said discriminating device (80) is adapted to select the end menu item with the largest number of former selections.

5. The car multimedia system of any of claims 3 to 4, **characterized by** a data memory for storing data packets each being assigned to an end-menu item, wherein each data packet carries the number of selections of the assigned end-menu item.

6. The car multimedia system of claim 5, **characterized in that** each data packet further carries the date of last use of the assigned end-menu item.

7. The car multimedia system of claim 5 or 6, **characterized in that** said data memory stores at least two data packets for each assigned end-menu item.

8. The car multimedia system of any of the preceding claims, **characterized in that** said discriminating device is adapted to allow the selection of menu items according to their hierarchical structure by using the rotary push button, wherein this mode of selection is termed overrule mode.

9. The car multimedia system of claim 8, **characterized in that** said overrule mode is activated by a double activation of said hard key.

10. The car multimedia system of claim 5, **characterized in that** said controller device is adapted to delete said data packets assigned to at least one of said end-menu items in response to a predetermined input via said selection key unit.

11. The car multimedia system of claim 1 or 2, **characterized in that** said control device is adapted to allow the selection of a criterion out of a predetermined list of criteria via said selection key unit.

12. The car multimedia system of any of the preceding claims, **characterized by** a telecommunications unit comprising a telephone module and an internet module allowing e-mail and SMS transmission, WAP, and other telecommunication services.

13. The car multimedia system of any of the preceding claims, **characterized in that** said audio unit comprises a radio module and a CD module.

14. The car multimedia system of any of the preceding claims, **characterized in that** said rotary knob and said push button switch are provided as a rotary push button switch.

15. The car multimedia system of any of the preceding claims, **characterized in that** said hard key is provided for activating the navigation unit.

16. The car multimedia system of claim 15, **characterized in that** a further hard key is provided for activating the audio unit.

17. A method for activating a function of a car multimedia system, the system comprising an audio unit, a navigation unit for route guidance, a controller device for controlling said units, a display for displaying selection menus with hierarchically structured menu items and end-menu items, said end-menu items allowing to start a specific function, and a selection key unit comprising at least a hard key, a rotary knob for selecting and a push button switch for activating menu items, **characterized by** the step of selecting an end-menu item in response to an actuation of said hard key by skipping sub-levels and menu items between a root menu item and said end-menu item, wherein said end-menu item is selected on the basis of a predetermined criterion.

18. Said method of claim 17, **characterized in that** said end-menu item is both selected and activated in response to said actuation of said hard key.

19. The method of claim 17 or 18, **characterized in that** said criterion is the number of former selections of said end-menu items assigned to said hard key.

20. The method of claim 19, **characterized in that** the end-menu item with the greatest number of selections is selected.

21. The method of claim 19 or 20, **characterized in that** with each selection of an end-menu item a counter value assigned to said end menu item is increased by one.

22. The method of claim 21, **characterized in that** an actual date of use is stored for an end-menu item with each selection of said end-menu item.

23. The method of any of claims 17 to 22, **characterized in that** the selection and activation of menu items according to their hierarchical structure is allowed (overrule mode) in response to a predetermined operation of said selection key unit, preferably a double actuation of said hard key.

24. The method of claim 21, **characterized in that** said counter values may be deleted either separately or in common via said selection key unit.

## Patentansprüche

1. Fahrzeugmultimediasystem, umfassend
- eine Audioeinheit (64),
- eine Navigationseinheit (70) für eine Routenführung,
- eine Steuervorrichtung (50) zum Steuern der Einheiten,
- eine Anzeige (22) zum Anzeigen von Auswahlmenüs mit hierarchisch strukturierten Menüeinträgen und Endmenüeinträgen, wobei die Endmenüeinträge das Starten einer bestimmten Funktion ermöglichen, und eine Auswahltasteneinheit (56), die mindestens einen Druckknopfschalter (18), vorzugsweise eine Festtaste, einen Zweiwegeschalter, vorzugsweise einen Drehknopf, zum Auswählen, und einen Druckknopfschalter (16) zum Aktivieren von Menüeinträgen und Endmenüeinträgen umfasst, **gekennzeichnet durch**
- eine Unterscheidungsvorrichtung (80), die zum Auswählen eines Endmenüeintrags (34) in Erwiderung auf eine Betätigung des Druckknopfschalters (18), vorzugsweise der Festtaste, **durch** Überspringen von Unterebenen und Menüeinträgen zwischen einem Hauptmenüeintrag und dem Endmenüeintrag ausgestaltet ist, wobei der Endmenüeintrag (34) von der Unterscheidungsvorrichtung (80) auf Grundlage eines vorbestimmten Kriteriums ausgewählt wird.

2. Fahrzeugmultimediasystem nach Anspruch 1, **dadurch gekennzeichnet, dass** die Unterscheidungsvorrichtung sowohl zum Auswählen als auch zum Aktivieren des Endmenüeintrags ausgestaltet ist.

3. Fahrzeugmultimediasystem nach Anspruch 1 oder 2, **dadurch gekennzeichnet, dass** das Kriterium die Anzahl von vorangegangenen Auswahlvorgängen der Endmenüeinträge, die der Festtaste zugeordnet wurden, ist.

4. Fahrzeugmultimediasystem nach Anspruch 3, **dadurch gekennzeichnet, dass** die Unterscheidungsvorrichtung (80) zum Auswählen des Endmenüeintrags mit der größten Anzahl von vorangegangenen Auswahlvorgängen ausgestaltet ist.

5. Fahrzeugmultimediasystem nach einem der Ansprüche 3-4, **gekennzeichnet durch** einen Datenspeicher zum Speichern von Datenpaketen, wobei jedes einem Endmenüeintrag zugeordnet ist, wobei jedes Datenpaket die Anzahl von Auswahlvorgängen des zugeordneten Endmenüeintrags trägt.

6. Fahrzeugmultimediasystem nach Anspruch 5, **dadurch gekennzeichnet, dass** jedes Datenpaket des Weiteren das Datum einer letzten Verwendung des zugeordneten Endmenüeintrags trägt.

7. Fahrzeugmultimediasystem nach Anspruch 5 oder 6, **dadurch gekennzeichnet, dass** der Datenspeicher mindestens zwei Datenpakete für jeden zugeordneten Endmenüeintrag speichert.

8. Fahrzeugmultimediasystem nach einem der vorstehenden Ansprüche, **dadurch gekennzeichnet, dass** die Unterscheidungsvorrichtung ausgestaltet ist, um die Auswahl von Menüeinträgen gemäß ihrer hierarchischen Struktur durch Verwenden des Dreh-Druck-Knopfes zu ermöglichen, wobei dieser Auswahlmodus Überstimmmodus genannt wird.

9. Fahrzeugmultimediasystem nach Anspruch 8, **dadurch gekennzeichnet, dass** der Überstimmmodus durch ein zweifaches Betätigen der Festtaste aktiviert wird.

10. Fahrzeugmultimediasystem nach Anspruch 5, **dadurch gekennzeichnet, dass** die Steuervorrichtung zum Löschen der Datenpakete, die mindestens einem der Endmenüeinträge zugeordnet sind, in Erwiderung auf eine vorbestimmte Eingabe mittels der Auswahltasteneinheit ausgestaltet ist.

11. Fahrzeugmultimediasystem nach Anspruch 1 oder 2, **dadurch gekennzeichnet, dass** die Steuervorrichtung zum Ermöglichen der Auswahl eines Kriteriums aus einer vorbestimmten Liste von Kriterien mittels der Auswahltasteneinheit ausgestaltet ist.

12. Fahrzeugmultimediasystem nach einem der vorstehenden Ansprüche, **gekennzeichnet durch** eine Telekommunikationseinheit, die ein Telefonmodul und ein Internetmodul umfasst, die E-mail- und SMS-Übermittlungen, WAP und andere Telekommunikationsdienste ermöglichen.

13. Fahrzeugmultimediasystem nach einem der vorstehenden Ansprüche, **dadurch gekennzeichnet, dass** die Audioeinheit ein Radiomodul und ein CD-Modul umfasst.

14. Fahrzeugmultimediasystem nach einem der vorstehenden Ansprüche, **dadurch gekennzeichnet, dass** der Drehknopf und der Druckknopfschalter als Dreh-Druckknopf-Schalter bereitgestellt werden.

15. Fahrzeugmultimediasystem nach einem der vorstehenden Ansprüche, **dadurch gekennzeichnet, dass** die Festtaste zum Aktivieren der Navigationseinheit bereitgestellt wird.

16. Fahrzeugmultimediasystem nach Anspruch 15, **dadurch gekennzeichnet, dass** eine weitere Festtaste zum Aktivieren der Audioeinheit bereitgestellt wird.

17. Verfahren zum Aktivieren einer Funktion eines Fahrzeugmultimediasystems, wobei das System eine Audioeinheit, eine Navigationseinheit zur Routenführung, eine Steuereinheit zum Steuern der Einheiten, eine Anzeige zum Anzeigen von Auswahlmenüs mit hierarchisch strukturierten Menüeinträgen und Endmenüeinträgen, wobei die Endmenüeinträge es ermöglichen, eine bestimmte Funktion zu starten, und eine Auswahltasteneinheit umfasst, die mindestens eine Festtaste, einen Drehknopf zum Auswählen und einen Druckknopfschalter zum Aktivieren von Menüeinträgen umfasst, **gekennzeichnet durch** den Schritt eines Auswählens eines Endmenüeintrags in Erwiderung auf eine Betätigung der Festtaste **durch** Überspringen von Unterebenen und Menüeinträgen zwischen einem Hauptmenüeintrag und dem Endmenüeintrag, wobei der Endmenüeintrag auf Grundlage eines vorbestimmten Kriteriums ausgewählt wird.

18. Verfahren nach Anspruch 17, **dadurch gekennzeichnet, dass** der Endmenüeintrag sowohl ausgewählt als auch aktiviert wird in Erwiderung auf die Betätigung der Festtaste.

19. Verfahren nach Anspruch 17 oder 18, **dadurch gekennzeichnet, dass** das Kriterium die Anzahl von vorangegangenen Auswahlvorgängen der Endmenüeinträge, die der Festtaste zugeordnet wurden, ist.

20. Verfahren nach Anspruch 19, **dadurch gekennzeichnet, dass** der Endmenüeintrag mit der größten Anzahl von Auswahlvorgängen ausgewählt wird.

21. Verfahren nach Anspruch 19 oder 20, **dadurch gekennzeichnet, dass** mit jeder Auswahl eines Endmenüeintrags ein Zählerwert, der dem Endmenüeintrag zugeordnet ist, um eins erhöht wird.

22. Verfahren nach Anspruch 21, **dadurch gekennzeichnet, dass** ein aktuelles Verwendungsdatum für einen Endmenüeintrag mit jeder Auswahl des Endmenüeintrags gespeichert wird.

23. Verfahren nach einem der Ansprüche 17-22, **dadurch gekennzeichnet, dass** die Auswahl und Aktivierung von Menüeinträgen gemäß ihrer hierarchischen Struktur ermöglicht wird (Überstimmmodus), in Erwiderung auf eine vorbestimmte Betätigung der Auswahltasteneinheit, vorzugsweise eine doppelte Betätigung der Festtaste.

24. Verfahren nach Anspruch 21, **dadurch gekennzeichnet, dass** die Zählerwerte entweder getrennt oder gemeinsam mittels der Auswahltasteneinheit gelöscht werden können.

## Revendications

1. système multimédia pour voiture comprenant :
- une unité audio (64),
- une unité de navigation (70) pour le guidage de route,
- un dispositif de commande (50) pour commander lesdites unités,
- un affichage (22) pour afficher des menus de sélection avec des objets de menu et des objets de menu final structurés de manière hiérarchique, lesdits objets de menu final permettant de démarrer une fonction spécifique et une unité de touches de sélection (56) comprenant au moins un commutateur à bouton poussoir (18), de préférence une touche dure, un commutateur à deux voies, de préférence un bouton rotatif, pour la sélection et un commutateur à bouton poussoir (16) pour activer les objets de menu et les objets de menu final, **caractérisé par** :
- un dispositif de discrimination (80) adapté à sélectionner un objet de menu final (34) en réponse à un actionnement dudit commutateur à bouton poussoir (18), de préférence ladite touche dure, en sautant les niveaux secondaires et les objets de menu entre un objet de menu racine et ledit objet de menu final, ledit objet de menu final (34) étant sélectionné par le biais du dispositif de discrimination (80) sur la base d'un critère prédéterminé.

2. Système multimédia pour voiture de la revendication 1, **caractérisé en ce que** ledit dispositif de discrimination est adapté à la fois à sélectionner et à activer ledit objet de menu final.

3. Système multimédia pour voiture selon la revendication 1 ou 2, **caractérisé en ce que** ledit critère est le nombre de sélections antérieures des objets de menu final attribué à ladite touche dure.

4. Système multimédia pour voiture selon la revendication 3, **caractérisé en ce que** ledit dispositif de discrimination (80) est adapté à sélectionner l'objet de menu final avec le plus grand nombre de sélections antérieures.

5. Système multimédia pour voiture selon l'une quelconque des revendications 3 à 4, **caractérisé par** une mémoire de données pour stocker des paquets de données étant chacun attribués à un objet de menu final, dans lequel chaque paquet de données porte le nombre de sélections de l'objet de menu final attribué.

6. Système multimédia pour voiture selon la revendication 5, **caractérisé en ce que** chaque paquet de données porte en outre la date de dernière utilisation de l'objet de menu final attribué.

7. Système multimédia pour voiture selon la revendication 5 ou 6, **caractérisé en ce que** ladite mémoire de données stocke au moins deux paquets de données pour chaque objet de menu final attribué.

8. Système multimédia pour voiture selon l'une quelconque des revendications précédentes, **caractérisé en ce que** ledit dispositif de discrimination est adapté à permettre la sélection des objets de menu selon leur structure hiérarchique en utilisant le bouton poussoir rotatif, dans lequel ce mode de sélection est appelé mode de dépassement.

9. Système multimédia pour voiture selon la revendication 8, **caractérisé en ce que** ledit mode de dépassement est activé par une double activation de ladite touche dure.

10. Système multimédia pour voiture selon la revendication 5, **caractérisé en ce que** ledit dispositif de commande est adapté à effacer lesdits paquets de données attribués à au moins un desdits objets de menu final en réponse à une entrée prédéterminée par le biais de ladite unité de touches de sélection.

11. Système multimédia pour voiture selon la revendication 1 ou 2, **caractérisé en ce que** ledit dispositif de commande est adapté à permettre la sélection d'un critère parmi une liste prédéterminée de critères par le biais de ladite unité de touches de sélection.

12. Système multimédia pour voiture selon l'une quelconque des revendications précédentes, **caractérisé par** une unité de télécommunication comprenant un module de téléphone et un module Internet permettant une transmission de courrier électronique et de SMS, des services WAP et d'autres services de télécommunication.

13. Système multimédia pour voiture selon l'une quelconque des revendications précédentes, **caractérisé en ce que** ladite unité audio comprend un module radio et un module CD.

14. Système multimédia pour voiture selon l'une quelconque des revendications précédentes, **caractérisé en ce que** ledit bouton rotatif et ledit commutateur à bouton poussoir sont prévus comme un commutateur à bouton poussoir rotatif.

15. Système multimédia pour voiture selon l'une quelconque des revendications précédentes, **caractérisé en ce que** ladite touche dure et prévue pour activer l'unité de navigation.

16. Système multimédia pour voiture selon la revendication 15, **caractérisé en ce qu'**une autre touche dure et prévue pour activer l'unité radio.

17. Procédé pour activer une fonction d'un système multimédia pour voiture, le système comprenant une unité audio, une unité de navigation pour le guidage sur route, un dispositif de commande pour commander lesdites unités, un affichage pour afficher les menus de sélection avec des objets de menu structurés de manière hiérarchique et des objets de menu final, lesdits objets de menu final permettant de démarrer une fonction spécifique et une unité de touches de sélection comprenant au moins une touche dure, un bouton rotatif pour sélectionner et un commutateur à bouton poussoir pour activer les objets de menu, **caractérisé par** l'étape consistant à sélectionner un objet de menu final en réponse à un actionnement de ladite touche dure en sautant les niveaux secondaires et les objets de menu entre un objet de menu racine et ledit objet de menu final, dans lequel ledit objet de menu final est sélectionné sur la base d'un critère prédéterminé.

18. Procédé selon la revendication 17, **caractérisé en ce que** ledit objet de menu final est à la fois sélectionné et activé en réponse audit actionnement de ladite touche dure.

19. Procédé selon la revendication 17 ou 18, **caractérisé en ce que** ledit critère est le nombre de sélections antérieures desdits objets de menu final attribué à ladite touche dure.

20. Procédé selon la revendication 19, **caractérisé en ce que** l'objet de menu final avec le plus grand nombre de sélections est sélectionné.

21. Procédé selon la revendication 19 ou 20, **caractérisé en ce qu'**avec chaque sélection d'un objet de menu final, une valeur de compteur attribuée audit objet de menu final est augmentée de 1.

22. Procédé selon la revendication 21, **caractérisé en ce qu'**une date d'utilisation réelle est stockée pour un objet de menu final avec chaque sélection dudit objet de menu final.

23. Procédé selon l'une quelconque des revendications 17 à 22, **caractérisé en ce que** la sélection et l'activation des objets de menu selon leur structure hiérarchique est permise (mode de dépassement) en réponse à une opération prédéterminée de ladite unité de touches de sélection, de préférence un double actionnement de ladite touche dure.

24. Procédé selon la revendication 21, **caractérisé en ce que** lesdites valeurs de compteur peuvent être effacées soit séparément soit en commun par le biais de ladite unité de touches de sélection.
